# EUROPEAN PATENT SPECIFICATION

(11) **EP 4 137 609 B1**
(45) Date of publication and mention of the grant of the patent: **24.07.2024**
(21) Application number: 22158339.6
(22) Date of filing: 23.02.2022
(51) Int. Cl.: C25B 1/04, C25B 9/70, C25B 15/023, C25B 15/02

(54) **HYDROGEN PRODUCING SYSTEM, HYDROGEN PRODUCING METHOD**
WASSERSTOFFERZEUGUNGSSYSTEM, VERFAHREN ZUR PRODUKTION VON WASSERSTOFF
SYSTÈME DE PRODUCTION D'HYDROGÈNE, PROCÉDÉ DE PRODUCTION D'HYDROGÈNE

(30) Priority: 18.08.2021 JP 2021133572
(43) Date of publication of application: 22.02.2023
(73) Proprietor: Hitachi, Ltd., Tokyo 100-8280 (JP)
(72) Inventor: WATANABE, Keiji, Tokyo, 100-8280 (JP); MIZUKAMI, Takaaki, Tokyo, 100-8280 (JP); FURUTA, Futoshi, Tokyo, 100-8280 (JP)
(74) Representative: Mewburn Ellis LLP

(56) References cited:
- FR-A1- 2 960 559

## Description

### Technical Field

This disclosure relates to a hydrogen producing system that produces hydrogen by a plurality of water electrolysis stacks.

### Background Art

For the sake of expanding use of hydrogen energy, it is required to reduce costs of hydrogen. In order to reduce hydrogen costs, it is necessary to reduce costs for producing hydrogen. Hydrogen is produced by methods such as water electrolysis. Costs for producing hydrogen are roughly categorized into capital expense (CAPEX) and operating expense (OPEX). OPEX consists of such as procurement cost for electric power used for water electrolysis, system maintenance cost, and the like. In order to reduce CAPEX, approaches such as below are necessary.

- reducing equipment costs
- improving equipment operation rate (increasing amount of hydrogen production)
- improving equipment lifetime (reducing equipment amortization expense)

In recent years, it is drawing attention to produce hydrogen utilizing recyclable energy. However, the amount of electric power generation from recyclable energy varies by effects of wind power or weather. Thus it is a technical problem to improve operating rate of hydrogen producing equipment. As measures to solve such problem, it is conceivable to produce hydrogen after leveling electric power by rechargeable batteries. However, such measure increases equipment cost by introducing rechargeable batteries, which makes it difficult to reduce CAPEX. Accordingly, a technique is required that can reduce CAPEX without using rechargeable batteries.

In order to improve equipment lifetime of hydrogen producing system, it is necessary to suppress degradation of water electrolysis cell, which is a component of the system. Water electrolysis methods include : alkaline electrolysis, PEM (Proton Exchange Membrane) electrolysis, AEM (Anion Exchange Membrane) electrolysis, etc. Hereinafter, suppressing degradation of PEM electrolysis cell will be described.

As the water electrolysis stack operates (start and stop), the electrolyte membrane repeatedly expands and contracts due to fluctuations in temperature, pressure, and moisture content. As a result, fibers (carbon or Ti) forming a diffusion layer penetrate into the electrolyte membrane. The state in which minute current leakage occurs between anode and cathode by this phenomenon is referred to as micro short. If the operation of the water electrolysis stack is continued with the micro short being generated, heat generation at the leakage point and burning of the film progress, which leads to pinhole formation (leakage of water and gas). Patent Document 1 discloses, in order to detect the micro short, a technique for determining the presence or absence of a micro short by individually stopping water electrolysis stacks and by measuring a voltage-current characteristic.

Patent Document 2 describes that: in order to follow the maximum power point (MPP) of renewable energy (photovoltaic power generation), each of strings (serial units) where a plurality of water electrolysis stacks is serially connected is individually turned ON/OFF, and further each of stacks in the string is turned ON/OFF.

Patent Document 3 describes that the power adjusting unit 42 individually adjusts the power of each water electrolysis stack in accordance with the fluctuation of the amount of power supplied from the renewable energy (photovoltaic power generation). In this document, the input current is controlled so as to maximize the electrolysis efficiency of the water electrolysis stack.

Non-Patent Documents 1 to 3 below describe verification results on how the degree of deterioration of a water electrolysis stack changes by varying the current density supplied to the water electrolysis stack and the operating time of the electrolysis stack. The relationship between these documents and the present disclosure will be described again in the embodiments described later.

Japanese Patent Application No. 2021-023663 describes, as a technique related to the present disclosure, a technique for suppressing deterioration of a water electrolysis stack by rotating an operational state of the water electrolysis stack.

FR2960559 discloses an installation for producing hydrogen that is useful to synthesize chemical products, comprises hydrogen production modules comprising electrolysis cells, power supplies, fluid treatment unit, sensor, pilot, driver, and hydrogen storage tank

### Citation List

### Patent Document

Patent Document 1 : JP 2020-196906 A
Patent Document 2 : JP 2016-518519 A (JP Patent No. 6058205)
Patent Document 3 : JP 2007-031813 (JP Patent No. 4842577)

### Non-patent document

Non-Patent Document 1 : C. Rakousky et al., J. Power Sources 342, 38 (2017)
Non-Patent Document 2 : S. French, "Lifetime investigation of PEM electrolyzers under realistic load profiles", PhD Thesis, Aalborg University (2018)
Non-Patent Document 3 : C. Rakousky et al., Electrochimica Acta 278, 324 (2018)

### Summary of Invention

### Technical Problem

When a defect occurs in a particular water electrolysis stack, various approaches are contemplated to mitigate the impact on other water electrolysis stacks. For example, in Patent Document 2, it is assumed that a defect has occurred in a certain water electrolysis stack. At this time, if the input power to the water electrolysis system is decreased by amount required for one string, and then if the string including the defective stack is turned off, it is possible to prevent the load of other strings from increasing or to prevent other strings from deterioration. However, the operating rate of the water electrolysis system is reduced by the normal stacks in the turned-off string. Alternatively, only the defective stack may be turned off. However, in this case, since one stack of the strings is short-circuited, the voltage applied to the other stack is increased, and then there is a possibility that stack degradation due to overload progresses. This is because there is no mechanism for adjusting the voltage for each string in Patent Document 2, and thus the applied voltage to each stack is increased and accelerates the stack deterioration. Therefore, it is considered that simply turning off the defective stack is insufficient as a countermeasure for the defect.

In Patent Document 3, it is now assumed that a defect has occurred in a certain water electrolysis stack. After individually turning off the defective stack as in Patent Document 2, if the electric power supplied to that string is adjusted by DC/DC converter, it is possible to continue operation of the water electrolysis system. However, similar to Patent Document 2, there is a possibility that stack degradation may progress due to an increase in the load on other stacks. This is because in Patent Documents 2 to 3, any specific method for suppressing stack degradation is not sufficiently considered.

The present disclosure has been made in view of the above-mentioned problems. An object of the present disclosure is to provide a technique capable of effectively suppressing deterioration of a water electrolysis stack even when a defective stack occurs in a hydrogen producing system for producing hydrogen using a plurality of water electrolysis stacks.

### Solution to Problem

The hydrogen producing system according to the present disclosure is as set forth in claim 1.

### Advantageous Effects of Invention

According to the hydrogen producing system of the present disclosure, it is possible to effectively suppress deterioration of the water electrolysis stack even when a defective stack occurs.

### Brief Description of Drawings

Figure 1 is a configuration diagram of a hydrogen producing system 1 according to example 1.
Figure 2 is a schematic diagram illustrating a procedure for controlling a power supply to each water electrolysis stack in the example 1.
Figure 3 illustrates an example of increasing the power supply for a normal string.
Figure 4 is a diagram illustrating another configuration example of the hydrogen producing system 1.
Figure 5 is an example of a user interface presented by a power distribution control system 14.
Figure 6 is a configuration diagram of the hydrogen producing system 1 according to an example 2 of the present disclosure.
Figure 7 illustrates an embodiment 1 of the present disclosure having a diode 152 in addition to a switch 151.
Figure 8 is a configuration diagram of the hydrogen producing system 1 according to an example 3 of the present disclosure.
Figure 9 is a configuration diagram of the hydrogen producing system 1 according to an example 4 of the present disclosure.

### Description of Embodiments

### <Example 1>

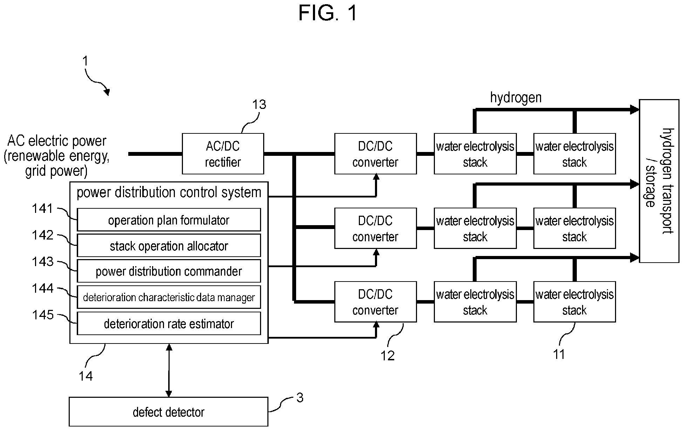

Figure 1 is a configuration diagram of a hydrogen producing system 1 according to an example 1 of the present disclosure. A hydrogen producing system 1 is a system to produce hydrogen using AC (alternating current) electric power supplied by renewable energy or power transmission and distribution systems. The hydrogen producing system 1 produces hydrogen by operating water electrolysis stacks 11 using the supplied electric power. The hydrogen producing system 1 includes water electrolysis stacks 11, a DC/DC converter 12, an AC/DC rectifier 13, a power distribution control system 14, and a defect detector 3.

The water electrolysis stack 11 produces hydrogen by electrolyzing water. In Figure 1, two water electrolysis stacks 11 are connected in series, and three pairs of the two water electrolysis stacks 11 as one pair are connected in parallel. Hydrogen produced by the water electrolysis stack 11 is outputted to the transport facility and to the storage facility.

The AC/DC rectifier 13 converts the AC power supplied to the hydrogen producing system 1 to DC (direct current) power, and outputs the converted power to the DC/DC converter 12. The DC/DC converters 12 control the operational status of the water electrolysis stack 11 by providing electric power to the water electrolysis stack 11.

The power distribution control system 14 controls the operational status of the water electrolysis stack 11 via the DC/DC converter 12 by outputting an operational command to the DC/DC converter 12. The power distribution control system 14 includes an operation plan formulator 141, a stack operation allocator 142, a power distribution commander 143, a deterioration characteristic data manager 144, and a deterioration rate estimator 145.

The operation plan formulator 141 formulates an operation rotation plan for the water electrolysis stack 11. The operation rotation means an order by which any one of run prioritized stack / stop prioritized stack is allocated, which will be an operational status of each water electrolysis stack 11. Details of those prioritized stacks will be described later. The stack operation allocator 142 determines the operational state of each water electrolysis stack 11 according to the operation rotation plan established by the operation plan formulator 141. The power distribution commander 143 provides an electric current command to the DC/DC converters 12 such that the water electrolysis stack 11 operates in accordance with its allocated operating status.

The deterioration characteristic data manager 144 has deterioration characteristic data describing the deterioration characteristic of the water electrolysis stack 11. The operation plan formulator 141 may formulate an operation rotation plan in accordance with this degradation characteristic. The deterioration rate estimator 145 estimates the deterioration rate of each water electrolytic stack 11 when it is assumed that the water electrolytic stack 11 is operated according to the plan.

"Defect" in the water electrolysis stack 11 (or string) means being uncapable of exhibiting hydrogen producing capacity as defined in specification of the stack (or string). "Deterioration" is an example of cause of defect, and means that components or the like are worn out or modified of its characteristic due to the cumulative operation time. In general, it is assumed that ageing degradation occurs when the product continues to be used in a normal manner of use. "Failure" is also an example of cause of defect, and means an event that is not assumed as deterioration. Failure may occur suddenly rather than over time. Since the present disclosure is targeting defects caused by both deterioration and failure, "defect" is used below as a term including both of them.

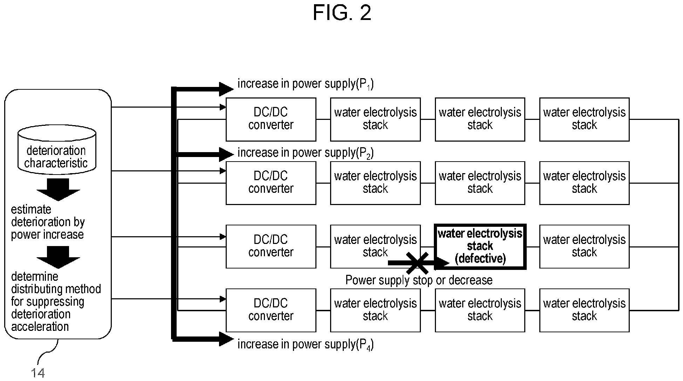

Figure 2 is a schematic diagram illustrating a procedure for controlling the electric power supply to each water electrolysis stack in the example 1. A series connection of a plurality of water electrolysis stacks 11 is referred to as a string (serial unit). The power distribution control system 14 reduces the power supply to the strings (defective strings) containing the defective water electrolysis stack 11 (defective stacks) into a level lower than that of before the defect occurs. It is not always necessary to stop the power supply. It is sufficient to at least reduce the power supply to a level lower than that of before the defect occurs.

The power distribution control system 14 compensates for the reduced power supply to the defective string by increasing the power supply to the other strings. In the example shown in Figure 2, a defective stack occurs in the third string. Therefore, the power supply P1, P2, P4 for the first, second, and fourth strings (normal strings) are increased in comparison with before the defect occurs. However, simply increasing the power supply may promote degradation of the water electrolysis stack 11. Therefore, the power distribution control system 14 adjusts the amount of power supplied to each string (and thus each water electrolysis stack 11) so as to suppress the deterioration of the water electrolysis stack 11 as much as possible according to the deterioration characteristics.

As an example of the power supply to the normal string, it is conceivable to control the power distribution so that a large current does not flow for a long time in the same string by utilizing the operation rotation similar to that described in JP Patent Application No. 2021-023663. Hereinafter, an example of the operation rotation and its effect will be described.

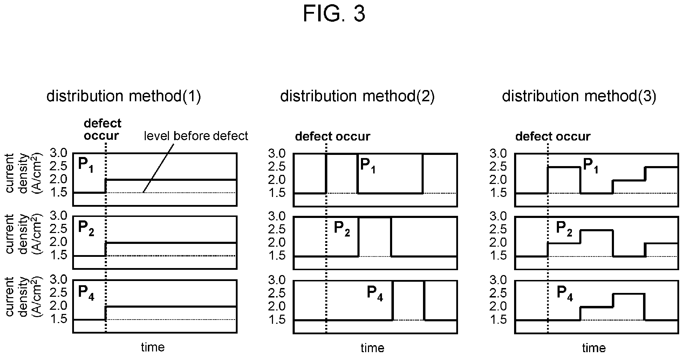

Figure 3 shows an example of increasing the power supply to a normal string. Now it is assumed that a defective stack has occurred in the third string as shown in Figure 2. It is assumed that the strings were operating in a current density 1.5A/cm² at the normal state (prior to the occurrence of the defect).

The distribution method (1) redistributes the electric power which was supplied to the third string equally to the first, second, and fourth strings. The current density supplied to each string prior to the defect was 1.5A/cm². Thus the current density supplied to each string after the defect is 2.0A/cm².

The distribution method (2) distributes the electric power which was supplied to the third string between the first, second, and fourth strings by operation rotation. The rotation is repeated such that, for example, one string bears all of the power of the third string in one period and then another string bears all of the power of the third string in the next period. The current densities supplied to the respective strings after the occurrence of the defect are 1.5 or 3.0A/cm². The current density 1.5A/cm² corresponds to the "low distribution serial unit" and 3.0A/cm² corresponds to the "high distribution serial unit".

The distribution method (3) performs rotation similarly to the distribution method (2). However, unlike the distribution method (2), any two or more strings jointly bear the power of the third string. The share of the load at each time point is distributed by rotation so that the sum of the load over a time period is equal among the strings. In this example, the current densities supplied to the respective strings after the occurrence of the defect are 1.5, 2.0, or 2.5A/cm². The current density 1.5A/cm² corresponds to a "low distribution serial unit". The current density 2.0 or 2.5A/cm² correspond to a "high distribution serial unit".

The distribution method to be used can be determined according to the deterioration characteristics. The power distribution control system 14 estimates the future deterioration rate when executing these power distributions based on the deterioration characteristics, and selects the distribution pattern to minimize the deterioration rate. Hereinafter, a calculation example of the degradation rate will be described using the degradation characteristic data described in Non-Patent Documents 1 to 3 as an example.

When a constant current density (2.0 A/cm²) is supplied as in the distribution method (1), numerical values such as a degradation rate of 194mV/h (Non-Patent Document 1) or 267mV/h (Non-Patent Document 2) have been reported. The degradation rate is equivalent to the voltage rise rate. The higher the voltage rise rate, the greater the degradation.

For the case of varying the current density as in the distribution method (2) (3), in Non-patent document 3, the operation of switching the current density between 2.5A/cm² and 1.0A/cm² every 6 hours is performed for about 300 hours, and then the operation of switching between 3.0A/cm² and 1.0A/cm² every 6 hours was performed for about 400 hours (i.e., a total of 700 hours operating). As a result, a value of the degradation rate of 63mV/h has been reported. This is a degradation rate of 1/3 or less of the distribution method (1).

Although the conditions of Non-Patent Document 3 are not the same as those of the distribution methods (2) (3), it is also reported in Non-Patent Document 2 that the deterioration rate can be more suppressed by dynamically changing the current density supplied to the water electrolysis stack rather than by making it constant. Therefore, the distribution methods (2) (3) are expected to have a lower degradation rate than the distribution method (1).

According to above, by the power distribution control in consideration of the deterioration characteristics of the water electrolytic stack 11, it is possible to reduce the deterioration rate of the water electrolytic stack 11 (1/3 or less according to the above estimation) as compared with the case where the deterioration characteristics are not considered (= the case where the power increment is equally distributed). The deterioration characteristic data describes the deterioration characteristic as described above. The power distribution control system 14 controls the power distribution in accordance with this degradation characteristic. For example, the degradation characteristic data describes each combination of the current density and the switching interval thereof and the degradation rate, respectively. The power distribution control system 14 uses one of those combinations in which the degradation rate is assumed to be the smallest.

A method of detecting a defect of the water electrolysis stack 11 will be described below. As a known method, it is possible to detect defects related to the water electrolysis characteristics by monitoring the characteristic values such as the voltage and current of each stack, or by monitoring performance values such as the amount of hydrogen generated. The defect detector 3 detects the defect of the water electrolytic stack 11 by monitoring these parameters.

Depending on the degree of defect of the stack, the following categories of cases may be used for supplying power to the defect stack.

(1) If the defect is small and can be continued to use:
   (1-1) the power supply of the entire hydrogen producing system 1 before the occurrence of the failure is maintained, even after the occurrence of the failure. The amount of electric power supplied to the defective string is slightly reduced from that before the occurrence of the defective string, and the normal string bears the reduced amount. The reduced amount is such that the progression of degradation of the defective stack can be suppressed (e.g., the current density supplied to the defective stack is 1.0A/cm²). Since there is a possibility that deterioration may proceed if the power supply is abruptly stopped, it is desirable to maintain a power supply amount which is smaller than that in the normal state but is not 0. On the other hand, between normal strings, for example, the operational rotation described in Figures 2-3 may be performed;
   (1-2) If it is possible to accept the power imbalance or a penalty associated therewith, it is not necessary to maintain the power supply amount of the entire hydrogen producing system 1 between before and after the occurrence of the defect. In this case, the amount of power supplied to the defective string is reduced to such an extent that the deterioration progress of the defective stack can be suppressed. The reduced amount of the power supply does not necessarily have to be entirely borne by the normal string.
(2) If the defect is severe and replacement is required:
   (2-1) The power supply to the defective stack is reduced over time. This is because if the stack is completely stopped suddenly, the deterioration of the stack may proceed rapidly. Power may be reduced over time and may be eventually stopped. The reduced power supply is borne by the normal string. In normal strings, all the stacks are operated, and the increase in the power supply amount is shared between the stacks using the operation rotation;
   (2-2) The power supply to the defective stack is stopped. If it is dangerous to continue the operation, it is desirable to stop the defective stack by completely shutting down the power supply. For example, this corresponds to a case in which a micro short as described in Patent Document 1, a risk of burning after occurrence of defect, or the like may occur. The reduced power supply is borne by the normal string. In the normal strings, all the stacks are operated, and the increase in the power supply amount is shared among the stacks using the operation rotation.
      (optional note) The degree of defect of the defective stack can be defined according to the method of detecting the defect. For example, in the case of detecting a defect utilizing decrease in the hydrogen production capacity, it can be said that the greater the decreased amount of the production capacity, the greater the degree of the defect. Alternatively, the soundness described in the examples described later may be used. If the degree of the defect is less than a predetermined reference value, the above (1) may be performed. If the degree of the defect is equal to or greater than the reference value, the above (2) may be performed.

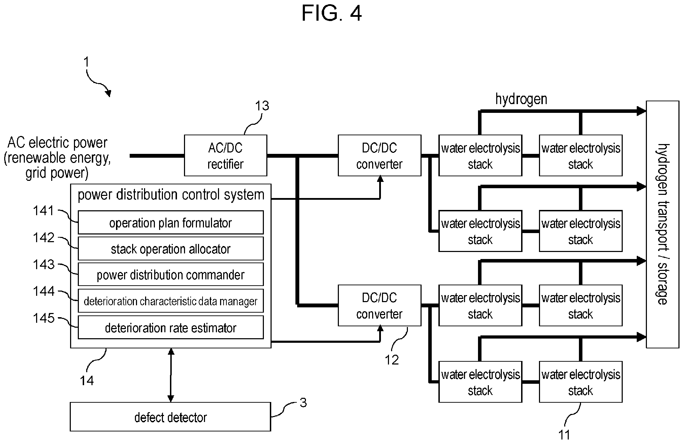

Figure 4 is a diagram showing another configuration example of the hydrogen producing system 1. As shown in Figure 4, one DC/DC converter 12 may control more than one string. The number of strings controlled by one DC/DC converter 12 may be the same for all DC/DC converters 12 or may be different for each DC/DC converter 12.

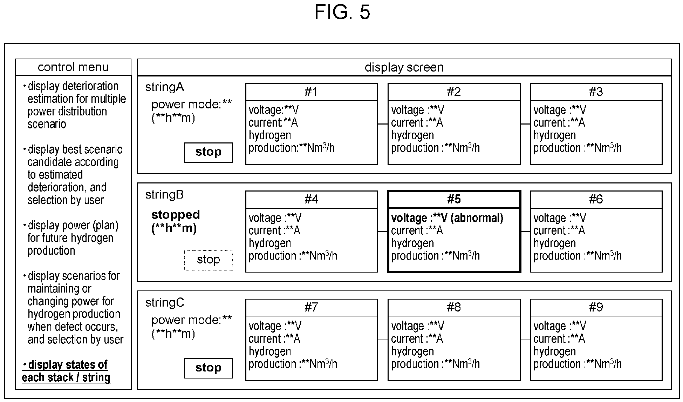

Figure 5 is an example of a user interface presented by the power distribution control system 14. The user interface may be presented, for example, as a screen interface shown on a display. The user interface may comprise, for example, a display screen and a control menu screen. Figure 5 shows a scene in which a menu for displaying the state of each stack/string is selected on the control menu.

The power distribution control system 14 displays the location of the defective stack and the content of the defect on the display screen. In the example of Figure 5, it is shown that the second water electrolysis stack 11 (# 5) of the string B is defective and that the voltage from the stack is abnormal. In addition, a "stop" button may cause the string to stop. In Figure 5, string B has already stopped.

The power distribution control system 14 displays a control menu on the control menu screen that can be selected by the user. The example of Figure 5 illustrates the following five menus: (a) presenting multiple combinations of power distribution for each string and the stack degradation rate due to the distribution; (b) presenting an optimal power distribution for each string based on the degradation prediction; (c) presenting a power plan to be used for hydrogen production in the future; (d) presenting power distribution for each string when maintaining or changing the power for hydrogen production in the event of a defect; (e) displaying the status of each stack/string.

When presenting the user interface, each functional unit operates as follows: (a) the degradation rate of the water electrolysis stack 11 is calculated by the degradation rate estimator 145 according to the degradation characteristics; (b) the power distribution for each string is determined by allocating the operation states of each water electrolysis stack 11 by the stack operation allocator according to the operation rotation established by the operation plan formulator 141 Examples 1-4 are not part of the invention.

### <Example 1: Summary>

The hydrogen manufacturing system 1 according to the example 1 controls the power distribution to each string on the basis of the deterioration prediction of the water electrolysis stack 11 calculated based on the location of the defective stack and the deterioration characteristics indicating the susceptibility for deterioration of the water electrolysis stack 11. Accordingly, even when a defective stack occurs, deterioration of the water electrolysis stack 11 can be effectively suppressed.

The hydrogen producing system 1 according to the example 1 adjusts the operation rotation so that one or more normal strings that do not include defective string share and bear the decrease in the power supply to the defective string. Accordingly, even when a defective stack occurs, it is possible to suppress the progress of the deterioration of a specific water electrolysis stack 11 only.

In the hydrogen producing system 1 according to the example 1, when the degree of the defect of the defective stack is small, the power supply to the defective string is decreased from the normal state, and the amount of the decrease is shared by rotation among the normal strings. Accordingly, when the degree of defect is small, the defective string bears a certain amount of power, as well as the normal strings bear the decreased amount along with suppressing the deterioration using the operation rotation. Therefore, the deterioration progress of the defective string can be suppressed without excessively increasing the load on the normal string.

The hydrogen producing system 1 according to the example 1 adjusts the power distribution in accordance with the deterioration characteristics of the water electrolysis stack 11 (for example, the deterioration characteristics described together with the distribution methods (1), (2), and (3)) so that the deterioration of the defective string is suppressed more than the deterioration of the normal string. For example, the power supply amount for the defective string is reduced, and the reduced amount is borne by the operation rotation among the normal string. As a result, even when a defective stack occurs, it is possible to effectively suppress the deterioration of the water electrolysis stack 11 in accordance with the deterioration characteristics.

### <Example 2>

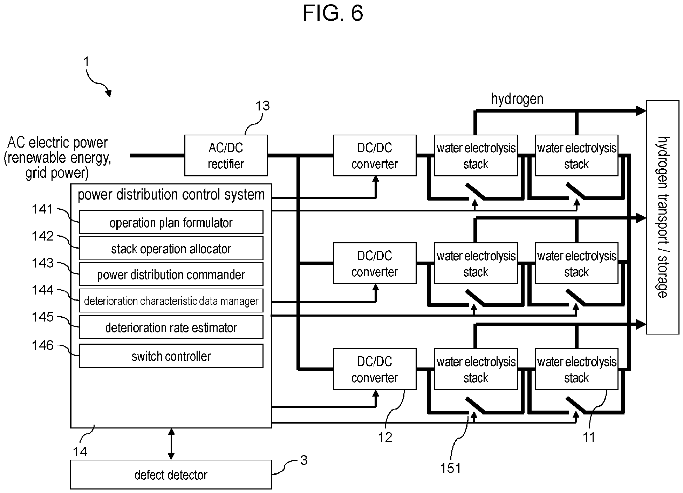

Figure 6 is a configuration diagram of the hydrogen producing system 1 according to an example 2 of the present disclosure. In the example 2, each water electrolysis stack 11 includes a switch 151. The switches 151 can individually turn ON/OFF the water electrolysis stacks 11. The water electrolysis stack 11 can be turned off by connecting the water electrolysis stack 11 and the switch 151 in parallel and by short-circuiting both ends of the water electrolysis stack 11 using the switch 151, for example. This is because a voltage is not applied to such water electrolysis stack 11. The switch 151 is controlled by a switch controller 146 provided in the power distribution control system 14.

When the defect detector 3 detects the defective stack, the power distribution control system 14 turns off only the defective stack by the switch 151. The other normal stacks in the defective string continue to operate in the same state as before the defect occurred. This reduces the power supply to the defective string by the amount that is no longer provided to the defective stack. The decreased power is borne by the normal strings by rotation in the same manner as in the example 1. Compared with the example 1, the increase in the power distribution to the normal string is smaller than that in the example 1. Thus the deterioration progress of the normal string can be further suppressed.

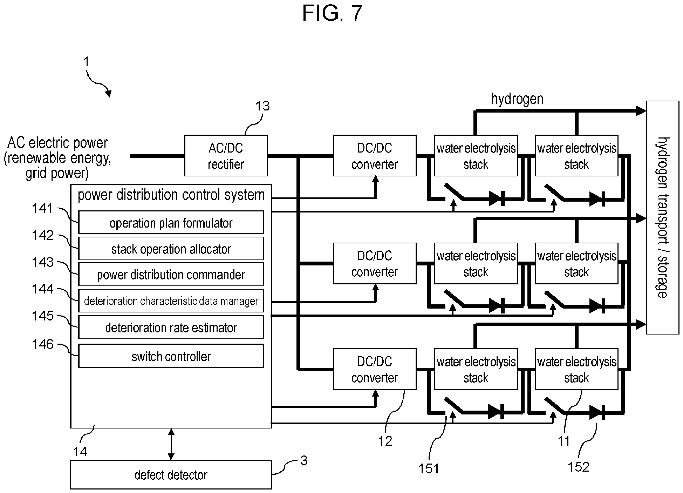

Figure 7 shows an embodiment including a diode 152 in addition to the switch 151. The diode 152 is provided for each of switch 151 and is serially connected (in parallel with water electrolysis stack 11) to switch 151. The voltage across the diode 152 when the switch 151 is closed (when the water electrolysis stack 11 is turned OFF) is configured to be approximately same as the voltage applied to the water electrolysis stack 11.

The power distribution control system 14 turns off the defective stack by switch 151. At this time, the voltage that has been applied to the defective stack before the defect occurrence, is applied across the both ends of the diode 152. Thus the voltage applied to the other water electrolytic stack 11 in the defective string does not change. Accordingly, it is possible to suppress the fluctuation of the voltage applied to the other water electrolytic stack 11 in the defective string. However, the amount of hydrogen produced in the defective string is lower than before the occurrence of the defective string.

Although a diode 152 is used in Figure 7, other electrical loads may be used as long as the voltage applied when the water electrolysis stack 11 is normally operated can be borne even when a defect occurs.

### <Example 3>

In an example 3 of the present disclosure, an example will be described adjusting the power distribution to each string according to the result of monitoring the soundness of the water electrolysis stack 11. Although soundness monitoring is a technique similar to defect detection, it can be distinguished as follows. The defect detection detects that the measured values such as the output voltage or output current of the water electrolytic stack 11 deviate from a specified range. In contrast, soundness monitoring monitors the degree of degradation (or normality) of the water electrolysis stack 11 when the measured value falls within the normal range, according to how much the performance of the water electrolysis stack 11 is degraded from 100% soundness. The soundness of a string can be defined, for example, by the average soundness of the stacks belonging to that string.

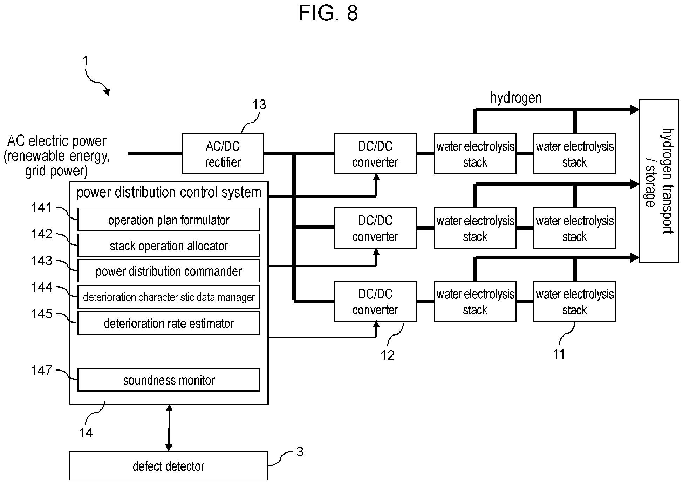

Figure 8 is a configuration diagram of the hydrogen producing system 1 according to the example 3. The power distribution control system 14 in the example 3 includes a soundness monitor 147. Other configurations are the same as those of the examples 1 to 2 (Figure 8 shows a configuration example similar to that of the example 1). The soundness monitor 147 monitors the soundness of the water electrolysis stack 11. Examples of the soundness include efficiency of hydrogen production (electrolysis efficiency). The value representing the soundness is normalized so that the new product has a soundness of 100%.

The power distribution control system 14 determines the power distribution for a normal string according to the soundness level when a defective stack occurs. In the example 1, the power distribution borne by each normal string is equal when summing up the temporal change. On the other hand, in the example 3, the power distribution to strings having a high degree of soundness is made larger than the power distribution to strings having a low degree of soundness. For example, in the distribution method (2) of Figure 3, it is assumed that the soundness of the first string and the second string are close to 100%, but the soundness of the fourth string is slightly lower (e.g., 90%). In this instance, the current densities borne by the fourth string may be 2.7A/cm², for example, and the remaining 0.3A/cm² may be borne by first and second strings.

The hydrogen producing system 1 according to the example 3 proportionately allocates the power to the normal string at the time of occurrence of defect according to the soundness of the water electrolysis stack 11. Accordingly, the deterioration of the string having low soundness is suppressed, so that the deterioration progress of the normal string can be made uniform.

### <Example 4>

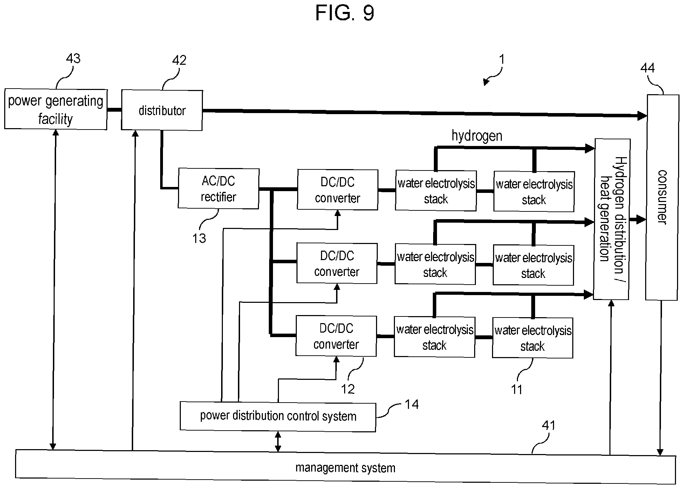

Figure 9 is a configuration diagram of the hydrogen producing system 1 according to an example 4 of the present disclosure. In the example 4, in addition to the configurations described in the examples 1-3, a management system 41 and a distributor 42 are provided. The management system 41 and the distributor 42 may be configured as a part of the hydrogen producing system 1, or may be configured as a functional unit separated from the hydrogen producing system 1.

In the present example, in accordance with instructions from the management system 41, the distributor 42 switches the destination of the power generated by the renewable energy power generating facility 43 between being provided to the water electrolysis stack 11 and being sold to the consumer 44 (i.e., to output the received power to the transmission and distribution system). The management system 41 instructs to the distributor 42, for example, a distribution ratio between those options.

The management system 41 further collects demand data for various types of energy (electric power, heat, hydrogen, etc.) from the consumer 44, and controls the energy distribution according to the data. For example, it is possible to perform control such as predicting the power demand and the spot price of energy reflecting the power demand, increasing the power selling ratio when the power demand is large, and producing hydrogen when the power demand is small. The supply amount of the energy may be similarly collected via related data, and the above control may be performed in accordance with the balance between the demand and the supply.

In many countries, there is a regulation to charge a penalty fee to the electricity seller when the electricity sold from the hydrogen producing system 1 increases or decreases (i.e., when an imbalance occurs) with respect to the planned amount reported in advance. This penalty fee may fluctuate up or down, reflecting power demand. Therefore, when a defective stack occurs, the management system 41 may determine whether or not to maintain the amount of sold power between before and after the defect occurs, after estimating the penalty fee according to the regulation rules. When the amount of electricity sold is maintained (i.e. when the amount of hydrogen produced is maintained), the amount of electricity sold is maintained as well as the deterioration of the water electrolysis stack 11 is suppressed by the operation rotation or the like described in the above example.

The management system 41 may determine whether to maintain the amount of hydrogen produced (i.e., whether to maintain the amount of electricity sold) in consideration of the degree of tightness of the demand with respect to the data on the supply and demand of hydrogen. For example, when a defective stack occurs, if the hydrogen demand is large, the hydrogen production amount is maintained as well as suppressing the deterioration of the water electrolysis stack 11 by the operation rotation or the like described in the above example. Alternatively, if there arises a problem by decreasing the hydrogen production because of the nature of the consumer (e.g., when a certain degree of hydrogen is always required in the production plant), the distribution ratio is determined so as to maintain the hydrogen production amount. If the consumer has a hydrogen storage facility and can accept a certain amount of fluctuation in hydrogen production, the demand for maintaining hydrogen production is small. In view of these circumstances, the management system 41 may determine whether or not to maintain the hydrogen production amount.

### <Modifications of the present disclosure>

The present disclosure is not limited to the above-described examples and embodiments, and various modifications are included. For example, the above-described examples and embodiments have been described in detail for the purpose of illustrating the present disclosure easily, and are not necessarily limited to those comprising all the described configurations. It is also possible to replace a part of the configuration of one embodiment with the configuration of another embodiment, and it is also possible to add the configuration of another embodiment to the configuration of one embodiment. Further, it is possible to add, delete, or replace a part of the configuration of each embodiment.

In the deterioration test of Non-Patent Document 1, it is described that a voltage of 1.4V or more is applied to the water electrolysis cell even when the current density is zero. This is slightly higher than the theoretical voltage of electrolysis of water (1.23V) and is a voltage value in the vicinity of the start of the electrolysis reaction. If the voltage is lowered to 0V during operation, reverse current may flow and the water electrolysis cell may be deteriorated. Therefore, in the present disclosure, DC/DC converters 12 are arranged at the entrances of the electric power paths supplied to the water electrolysis stack 11 so that voltages near the beginning of the electrolysis reactions can be applied to the water electrolysis stack 11 even when the electric current flowing through the water electrolysis stack 11 becomes zero. A similar role can be substituted by a power converter capable of outputting at least two or more types of voltages. Accordingly, such a power converter may be disposed instead of the DC/DC converter 12.

The present disclosure is also applicable to a fuel cell which performs a reverse reaction from water electrolysis. In that case, the water electrolysis stack 11 is replaced by the fuel cell stack, the power distribution control system 14 is replaced by the power generation sharing control system, and the flow of electric power and hydrogen are reversed from the present disclosure.

In the embodiment described above, the power distribution control system 14 and each functional unit thereof can be configured by hardware such as a circuit device in which these functions are implemented, or can be configured by software in which these functions are implemented being executed by a computing device such as a processor. The same applies to the defect detector 3 and the management system 41.

### Reference Signs List

1 : hydrogen producing system
11 : water electrolysis stack
12 : DC/DC converter
13 : AC/DC rectifier
14 : power distribution control system
3 : defect detector
41 : management system
42 : distributor

## Claims

1. A hydrogen producing system (1) in which a plurality of water electrolysis stacks (11) is electrically connected in series and in parallel, comprising:
a power distribution controller (14) configured to control a power distribution to each of serial units of the water electrolysis stack (11);
a power converter (12) configured to control an electric current flowing through the serial unit according to a command from the power distribution controller (14); and
a defect detector (3) configured to detect a defect in the water electrolytic stack (11) and to identify such water electrolysis stack (11) as a defective stack (11),
wherein the power distribution controller (14) is configured to control a power distribution to each of the serial units of the water electrolytic stacks (11) according to a deterioration prediction of the plurality of water electrolytic stacks (11) calculated based on a location of the defective stack (11) and on a deterioration characteristic indicating susceptibility for deterioration of the water electrolytic stack (11),
wherein the hydrogen producing system (1) further comprises a switch (151) capable of individually turning ON/OFF the water electrolysis stacks (11),
wherein the switch (151) is operable to turn off the defective stack (11),
wherein the hydrogen producing system (1) further comprises an electrical load (152) individually connected in parallel to each of the water electrolysis stacks (11), and
wherein the electrical load (152) is configured to receive a power that has been supplied to the defective stack (11) before turning off the defective stack (11), thereby suppressing fluctuations in a voltage applied to the water electrolytic stack (11) excluding the defective stack (11) when the defective stack (11) is turned off.

2. The hydrogen producing system (1) of claim 1,
wherein the power distribution controller (14) is configured to identify the serial unit including the defective stack (11) as a defective serial unit, and to identify the serial unit not including the defective stack (11) as a normal serial unit, and
wherein the power distribution controller (14) is configured to decrease a power supply amount to the defective serial unit and increases a power supply amount to the normal serial unit, thereby suppressing deterioration of the water electrolysis stack (11).

3. The hydrogen producing system (1) of claim 1,
wherein the power distribution controller (14) comprises an operation plan formulator (141) configured to establish an operation rotation plan of the water electrolytic stack (11) based on the degradation characteristic,
wherein the power distribution controller (14) comprises a stack operation allocator (142) configured to allocate an operational state of the water electrolysis stack (11) in the operation rotation plan,
wherein the power distribution controller (14) is configured to identify the serial unit including the defective stack (11) as a defective serial unit and the serial unit not including the defective stack (11) as a normal serial unit, and
wherein the stack operation allocator (142) is configured to allocate, as an operational state of the normal serial unit, any one of
a high distribution serial unit that receives a power distribution more than other ones of the normal serial unit over a predetermined period, or
a low distribution serial unit that receives power distribution less than other ones of the normal serial unit over a predetermined period.

4. The hydrogen producing system (1) of claim 3,
wherein in the operation rotation plan, the stack operation allocator (142) is configured to sequentially allocate the high distribution serial unit and the low distribution serial unit in a first order as an operational state of a first serial unit among a plurality of the normal serial units, and
wherein in the operation rotation plan, the stack operation allocator (142) is configured to sequentially allocate the high distribution serial unit and the low distribution serial unit in a second order different from the first order as an operational state of a second serial unit different from the first serial unit among the plurality of the normal serial units.

5. The hydrogen producing system (1) of claim 3,
wherein the power distribution controller (14) is configured to decrease a power supply amount to the defective serial unit and to increase a power supply amount to the normal serial unit, and
wherein the stack operation allocator (142) is configured to control an operational state of the high distribution serial unit so that one or more of the high distribution serial unit receives and shares the decreased power supply to the defective serial unit.

6. The hydrogen producing system (1) of claim 2,
wherein if a degree of defect of the defective stack (11) is less than a reference value, the power distribution controller (14) is configured to decrease a power supply amount to the defective serial unit to a level less than before the defect occurs and to an extent that can suppress deterioration progress of the defective stack (11), and
wherein the power distribution controller is configured to control the power distribution so that one or more of the normal serial unit receives and shares the decreased power supply to the defective serial unit.

7. The hydrogen producing system (1) of claim 3,
wherein the power distribution controller (14) comprises a deterioration rate calculator (145) that is configured to calculate, according to a deterioration characteristic of the water electrolytic stack (11), a deterioration rate of the water electrolytic stack (11) when performing the operation rotation plan, and
wherein the stack operation allocator (142) is configured to allocate an operational state of the water electrolysis stack (11) in the operation rotation plan so that the calculated deterioration rate in the defective serial unit is smaller than the calculated deterioration rate in the normal serial unit.

8. The hydrogen producing system (1) of claim 2,
wherein the hydrogen producing system (1) further comprises a soundness monitor (147) that is configured to monitor a soundness of the water electrolysis stack (11), and
wherein when the defect occurs, the power distribution controller (14) is configured to provide a larger power supply amount to the normal serial unit that has the soundness at a first level than the normal serial unit that has the soundness at a second level smaller than the first level.

9. The hydrogen producing system (1) of claim 1,
wherein the hydrogen producing system (1) is configured to receive a power from a power source,
wherein the hydrogen producing system (1) further comprises a distributor (42) that is configured to switch whether a supplied power from the power source is supplied to the water electrolysis stack (11) or is outputted to a transmission and distribution system, and
wherein the hydrogen producing system (1) further comprises a management system (41) configured to control, according to power demand, a ratio of the supplied power distributed by the distributor (42) between the water electrolysis stack (11) and the transmission and distribution system.

10. The hydrogen producing system (1) of claim 9,
wherein the management system (41) is configured to estimate a variation of power to be distributed to the transmission and distribution system in a case of reducing a power supply amount to the serial unit of the water electrolysis stack (11) including the defective stack (11),
wherein the management system (41) is configured to estimate, based on the power demand, an economic loss caused by a variation of power distributed to the transmission and distribution system, and
wherein the management system (41) is configured to control a distribution ratio of the supplied power between the water electrolysis stack (11) and the transmission and distribution system based on the estimated result of the economic loss.

11. A method for producing hydrogen wherein a plurality of water electrolysis stacks (11) is electrically connected in series and in parallel, wherein the plurality of water electrolysis stacks (11) further comprises a switch (151) capable of individually turning ON/OFF each of the plurality of water electrolysis stacks (11), and wherein an electrical load (152) is individually connected in parallel to each of the water electrolysis stacks (11), the method comprising:
controlling a power distribution to each of serial units of the water electrolysis stacks (11);
controlling an electric current flowing through the serial unit according to a result of the controlling the power distribution;
detecting a defect in the water electrolytic stack (11) and identifying such water electrolysis stack as a defective stack (11); and
turning off the defective stack (11) via the switch (151);
wherein in the controlling the electric current flowing through the serial unit, the power distribution to each of the serial units of the water electrolytic stack (11) is controlled based on a location of the defective stack (11) and a deterioration prediction of a plurality of the water electrolytic stacks (11) calculated based on a deterioration characteristic indicating susceptibility for deterioration of the water electrolytic stack (11), and
wherein the electrical load (152) of the defective stack (11) receives a power that has been supplied to the defective stack (11) before turning off the defective stack (11), thereby suppressing fluctuations in a voltage applied to the water electrolytic stack (11) excluding the defective stack (11) when the defective stack (11) is turned off.

## Patentansprüche

1. Wasserstoffherstellungssystem (1), in dem eine Vielzahl von Wasser-Elektrolyse-Stacks (11) elektrisch in Reihe und parallel geschaltet ist und das Folgendes umfasst:
eine Leistungsverteilungssteuerung (14), die ausgelegt ist, eine Leistungsverteilung zu jeder von Reiheneinheiten der Wasser-Elektrolyse-Stacks (11) zu steuern;
einen Leistungswandler (12), der ausgelegt ist, einen elektrischen Strom zu steuern, der durch die Reiheneinheit fließt, gemäß einem Befehl von der Leistungsverteilungssteuerung (14); und
einen Fehlerdetektor (3), der ausgelegt ist, einen Fehler im Wasser-Elektrolyse-Stack (11) zu detektieren und einen solchen Wasser-Elektrolyse-Stack (11) als fehlerhaften Stack (11) zu identifizieren,
wobei die Leistungsverteilungssteuerung (14) ausgelegt ist, die Leistungsverteilung zu jedem der Reiheneinheiten der Wasser-Elektrolyse-Stacks (11) gemäß einer Verschlechterungsvorhersage der Vielzahl von Wasser-Elektrolyse-Stacks (11) zu steuern, die basierend auf der Position des fehlerhaften Stacks (11) und auf einem Verschlechterungsmerkmal berechnet wurde, das die Anfälligkeit für eine Verschlechterung des Wasser-Elektrolyse-Stacks (11) angibt,
wobei das Wasserstoffherstellungssystem (1) weiters einen Schalter (151) umfasst, der in der Lage ist, die Wasser-Elektrolyse-Stacks (11) einzeln auf EIN und AUS zu schalten,
wobei der Schalter (151) betreibbar ist, um den fehlerhaften Stack (11) abzuschalten,
wobei das Wasserstoffherstellungssystem (1) weiters eine elektrische Last (152) umfasst, die individuell mit jedem der Wasser-Elektrolyse-Stacks (11) parallel geschaltet ist, und
wobei die elektrische Last (152) ausgelegt ist, eine Leistung zu empfangen, die dem fehlerhaften Stack (11) zugeführt wurde, bevor der fehlerhafte Stack (11) abgeschaltet wurde, wodurch Fluktuationen in der Spannung unterdrückt werden, die an den Wasser-Elektrolyse-Stack (11) mit Ausnahme des fehlerhaften Stacks (11) angelegt wird, wenn der fehlerhafte Stack (11) abgeschaltet ist.

2. Wasserstoffherstellungssystem (1) nach Anspruch 1,
wobei die Leistungsverteilungssteuerung (14) ausgelegt ist, um die Reiheneinheit, die den fehlerhaften Stack (11) umfasst, als defekte Reiheneinheit zu identifizieren und die Reiheneinheit, die nicht den fehlerhaften Stack (11) umfasst, als normale Reiheneinheit zu identifizieren und
wobei die Leistungsverteilungssteuerung (14) ausgelegt ist, die Leistungszufuhrmenge der defekten Reiheneinheit zu verringern und die Leistungszufuhrmenge zur normalen Reiheneinheit zu erhöhen, um so die Verschlechterung des Wasser-Elektrolyse-Stacks (11) zu unterdrücken.

3. Wasserstoffherstellungssystem (1) nach Anspruch 1,
wobei die Leistungsverteilungssteuerung (14) einen Betriebsplanformulierer (141) umfasst, der ausgelegt ist, einen Betriebsrotationsplan des Wasser-Elektrolyse-Stacks (11) basierend auf dem Verschlechterungsmerkmal zu erstellen,
wobei die Leistungsverteilungssteuerung (14) einen Stack-Betriebszuordner (142) umfasst, der ausgelegt ist, dem Wasser-Elektrolyse-Stack (11) einen Betriebszustand im Betriebsrotationsplan zuzuweisen,
wobei die Leistungsverteilungssteuerung (14) ausgelegt ist, die Reiheneinheit, die den fehlerhaften Stack (11) umfasst, als defekte Reiheneinheit zu identifizieren und die Reiheneinheit, die nicht den fehlerhaften Stack (11) umfasst, als normale Reiheneinheit zu identifizieren und
wobei der Stack-Betriebszuordner (142) ausgelegt ist, als Betriebszustand der normalen Reiheneinheit eine der folgenden zuzuweisen:
eine Reiheneinheit mit hoher Verteilung, die über einen vorbestimmten Zeitraum mehr Leistungsverteilung empfängt als andere der normalen Reiheneinheit oder
eine Reiheneinheit mit niedriger Verteilung, die über einen vorbestimmten Zeitraum weniger Leistungsverteilung empfängt als andere der normalen Reiheneinheit.

4. Wasserstoffherstellungssystem (1) nach Anspruch 3, wobei der Stack-Betriebszuordner (142) im Betriebsrotationsplan ausgelegt ist, die Reiheneinheit mit hoher Verteilung und die Reiheneinheit mit niedriger Verteilung nacheinander in einer ersten Reihenfolge als Betriebszustand einer ersten Reiheneinheit aus einer Vielzahl der normalen Reiheneinheiten zuzuordnen und
wobei der Stack-Betriebszuordner (142) im Betriebsrotationsplan ausgelegt ist, die Reiheneinheit mit hoher Verteilung und die Reiheneinheit mit niedriger Verteilung nacheinander in einer zweiten Reihenfolge, die sich von der ersten Reihenfolge unterscheidet, als Betriebszustand einer zweiten Reiheneinheit, die sich von der ersten Reiheneinheit unterscheidet, aus der Vielzahl der normalen Reiheneinheiten zuzuordnen.

5. Wasserstoffherstellungssystem (1) nach Anspruch 3,
wobei die Leistungsverteilungssteuerung (14) ausgelegt ist, die Leistungszufuhrmenge zur defekten Reiheneinheit zu verringern und die Leistungszufuhrmenge zur normalen Reiheneinheit zu erhöhen und
wobei der Stack-Betriebszuordner (142) ausgelegt ist, den Betriebszustand der Reiheneinheit mit hoher Verteilung so zu steuern, dass eine oder mehrere der Reiheneinheiten mit hoher Verteilung die verringerte Leistungszufuhr zur defekten Reiheneinheit teilen.

6. Wasserstoffherstellungssystem (1) nach Anspruch 2,
wobei, wenn der Fehlergrad des fehlerhaften Stacks (11) geringer ist als ein Referenzwert, die Leistungsverteilungssteuerung (14) ausgelegt ist, die Leistungszufuhrmenge zur defekten Reiheneinheit auf ein Niveau, das niedriger ist als vor dem Auftreten des Fehlers, und in einem Ausmaß zu verringern, dass das Fortschreiten der Verschlechterung des fehlerhaften Stacks (11) unterdrücken kann und
wobei die Leistungsverteilungssteuerung ausgelegt ist, die Leistungsverteilung so zu steuern, dass eine oder mehrere der normalen Reiheneinheiten die verringerte Leistungszufuhr zur defekten Reiheneinheit teilen.

7. Wasserstoffherstellungssystem (1) nach Anspruch 3, wobei die Leistungsverteilungssteuerung (14) einen Verschlechterungsratenrechner (145) umfasst, der ausgelegt ist, eine Verschlechterungsrate des Wasser-Elektrolyse-Stacks (11) gemäß einem Verschlechterungsmerkmal des Wasser-Elektrolyse-Stacks (11) zu berechnen, wenn der Betriebsrotationsplan ausgeführt wird und
wobei der Stack-Betriebszuordner (142) ausgelegt ist, einen Betriebszustand des Wasser-Elektrolyse-Stacks (11) im Betriebsrotationsplan so zuzuweisen, dass die berechnete Verschlechterungsrate in der defekten Reiheneinheit geringer ist als die berechnete Verschlechterungsrate in der normalen Reiheneinheit.

8. Wasserstoffherstellungssystem (1) nach Anspruch 2,
wobei das Wasserstoffherstellungssystem (1) weiters eine Unversehrtheitsüberwachungsvorrichtung (147) umfasst, die ausgelegt ist, die Unversehrtheit des Wasser-Elektrolyse-Stacks (11) zu überwachen, und
wobei, wenn der Fehler auftritt, die Leistungsverteilungssteuerung (14) ausgelegt ist, eine größere Leistungszufuhrmenge zur normalen Reiheneinheit zuzuführen, deren Unversehrtheit auf einem ersten Niveau ist, als zur normalen Reiheneinheit, deren Unversehrtheit auf einem zweiten Niveau ist, das niedriger ist als das erste Niveau.

9. Wasserstoffherstellungssystem (1) nach Anspruch 1,
wobei das Wasserstoffherstellungssystem (1) ausgelegt ist, Leistung von einer Leistungsquelle zu empfangen,
wobei das Wasserstoffherstellungssystem (1) weiters einen Verteiler (42) umfasst, der ausgelegt ist, umzuschalten, ob eine zugeführte Leistung von der Leistungsquelle zum Wasser-Elektrolyse-Stack (11) zugeführt wird, oder an ein Übertragungs- und Verteilungssystem ausgegeben wird, und
wobei das Wasserstoffherstellungssystem (1) weiters ein Verwaltungssystem (41) umfasst, das ausgelegt ist, das Verhältnis der zugeführten Leistung, das vom Verteiler (42) zwischen dem Wasser-Elektrolyse-Stack (11) und dem Übertragungs- und Verteilungssystem verteilt wird, gemäß einem Leistungsbedarf zu steuern.

10. Wasserstoffherstellungssystem (1) nach Anspruch 9,
wobei das Verwaltungssystem (41) ausgelegt ist, eine Variation der Leistung, die zum Übertragungs- und Verteilungssystem im Falle einer Verringerung der Leistungszufuhrmenge zur Reiheneinheit des Wasser-Elektrolyse-Stacks (11), der den fehlerhaften Stack (11) umfasst, verteilt werden soll, zu schätzen,
wobei das Verwaltungssystem (41) ausgelegt ist, basierend auf dem Leistungsbedarf den wirtschaftlichen Schaden zu schätzen, der durch eine Variation der Leistung verursacht wird, die zum Übertragungs- und Verteilungssystem verteilt wird, und
wobei das Verwaltungssystem (41) ausgelegt ist, das Verteilungsverhältnis der zugeführten Leistung zwischen dem Wasser-Elektrolyse-Stack (11) und dem Übertragungs- und Verteilungssystem basierend auf dem geschätzten Ergebnis des wirtschaftlichen Schadens zu steuern.

11. Verfahren zur Herstellung von Wasserstoff, wobei eine Vielzahl von Wasser-Elektrolyse-Stacks (11) elektrisch in Reihe und parallel geschaltet ist, wobei die Vielzahl von Wasser-Elektrolyse-Stacks (11) weiters einen Schalter (151) umfasst, der in der Lage ist, jeden der Vielzahl von Wasser-Elektrolyse-Stacks (11) individuell auf EIN/AUS zu schalten, und wobei eine elektrische Last (152) individuell mit jedem der Wasser-Elektrolyse-Stacks (11) parallel geschaltet wird, wobei das Verfahren Folgendes umfasst:
Steuern einer Leistungsverteilung zu jeder von Reiheneinheiten der Wasser-Elektrolyse-Stacks (11);
Steuern eines elektrischen Stroms, der durch die Reiheneinheit fließt, gemäß einem Ergebnis der Steuerung der Leistungsverteilung;
Detektieren eines Fehlers im Wasser-Elektrolyse-Stack (11) und Identifizieren eines solchen Wasser-Elektrolyse-Stacks als fehlerhaften Stack (11); und
Abschalten des fehlerhaften Stacks (11) mittels des Schalters (151);
wobei beim Steuern des elektrischen Stroms, der durch die Reiheneinheit fließt, die Leistungsverteilung zu jeder der Reiheneinheiten des Wasser-Elektrolyse-Stacks (11) basierend auf der Position des fehlerhaften Stacks (11) und einer Verschlechterungsvorhersage einer Vielzahl von Wasser-Elektrolyse-Stacks (11) gesteuert wird, die basierend auf einem Verschlechterungsmerkmal berechnet wurde, das die Anfälligkeit für eine Verschlechterung des Wasser-Elektrolyse-Stacks (11) angibt, und
wobei die elektrische Last (152) des fehlerhaften Stacks (11) eine Leistung empfängt, die dem fehlerhaften Stack (11) zugeführt wurde, bevor der fehlerhafte Stack (11) abgeschaltet wurde, wodurch Fluktuationen in der Spannung unterdrückt werden, die an den Wasser-Elektrolyse-Stack (11) mit Ausnahme des fehlerhaften Stacks (11) angelegt wird, wenn der fehlerhafte Stack (11) abgeschaltet ist.

## Revendications

1. Système de production d'hydrogène (1) dans lequel une pluralité de cellules d'électrolyse d'eau (11) sont connectées électriquement en série et en parallèle, comprenant :
un dispositif de commande de distribution de puissance (14) configuré pour commander une distribution de puissance à chacune des unités de série de la cellule d'électrolyse d'eau (11) ;
un convertisseur de puissance (12) configuré pour commander un courant électrique circulant à travers l'unité de série selon une instruction provenant du dispositif de commande de distribution de puissance (14) ; et
un détecteur de défaut (3) configuré pour détecter un défaut dans la cellule d'électrolyse d'eau (11) et pour identifier cette cellule d'électrolyse d'eau (11) comme une cellule défectueuse (11),
dans lequel le dispositif de commande de distribution de puissance (14) est configuré pour commander une distribution de puissance à chacune des unités de série des cellules d'électrolyse d'eau (11) selon une prédiction de détérioration de la pluralité de cellules d'électrolyse d'eau (11) calculée sur la base d'un emplacement de la cellule défectueuse (11) et d'une caractéristique de détérioration indiquant une sensibilité à la détérioration de la cellule d'électrolyse d'eau (11),
dans lequel le système de production d'hydrogène (1) comprend en outre un commutateur (151) capable d'allumer/d'éteindre individuellement les cellules d'électrolyse d'eau (11),
dans lequel le commutateur (151) peut être actionné pour éteindre la cellule défectueuse (11),
dans lequel le système de production d'hydrogène (1) comprend en outre une charge électrique (152) connectée individuellement en parallèle à chacune des cellules d'électrolyse d'eau (11), et
dans lequel la charge électrique (152) est configurée pour recevoir une puissance qui a été fournie à la cellule défectueuse (11) avant d'éteindre la cellule défectueuse (11), en supprimant ainsi des fluctuations d'une tension appliquée à la cellule d'électrolyse d'eau (11) en excluant la cellule défectueuse (11) lorsque la cellule défectueuse (11) est éteinte.

2. Système de production d'hydrogène (1) selon la revendication 1,
dans lequel le dispositif de commande de distribution de puissance (14) est configuré pour identifier l'unité de série incluant la cellule défectueuse (11) comme une unité de série défectueuse, et pour identifier l'unité de série n'incluant pas la cellule défectueuse (11) comme une unité de série normale, et
dans lequel le dispositif de commande de distribution de puissance (14) est configuré pour diminuer une quantité de fourniture de puissance à l'unité de série défectueuse et augmenter une quantité de fourniture de puissance à l'unité de série normale, en supprimant ainsi une détérioration de la cellule d'électrolyse d'eau (11).

3. Système de production d'hydrogène (1) selon la revendication 1,
dans lequel le dispositif de commande de distribution de puissance (14) comprend un formulateur de plan de fonctionnement (141) configuré pour établir un plan de rotation de fonctionnement de la cellule d'électrolyse d'eau (11) sur la base de la caractéristique de dégradation,
dans lequel le dispositif de commande de distribution de puissance (14) comprend un dispositif d'attribution d'opération de cellule (142) configuré pour attribuer un état opérationnel de la cellule d'électrolyse d'eau (11) dans le plan de rotation d'opération,
dans lequel le dispositif de commande de distribution de puissance (14) est configuré pour identifier l'unité de série incluant la cellule défectueuse (11) en tant qu'unité de série défectueuse et l'unité de série n'incluant pas la cellule défectueuse (11) en tant qu'unité de série normale, et
dans lequel le dispositif d'attribution d'opération d'empilement (142) est configuré pour attribuer, en tant qu'état opérationnel de l'unité de série normale, une quelconque parmi :
une unité de série à distribution élevée qui reçoit une distribution de puissance supérieure à celle des autres unités de l'unité de série normale sur une période prédéterminée, ou
une unité de série à distribution basse qui reçoit une distribution de puissance inférieure à celle des autres unités de l'unité de série normale sur une période prédéterminée.

4. Système de production d'hydrogène (1) selon la revendication 3,
dans lequel dans le plan de rotation d'opération, le dispositif d'attribution d'opération de cellule (142) est configuré pour attribuer séquentiellement l'unité de série à distribution élevée et l'unité de série à distribution basse dans un premier ordre en tant qu'état opérationnel d'une première unité de série parmi une pluralité d'unités de série normales, et
dans lequel dans le plan de rotation d'opération, le dispositif d'attribution d'opération de cellule (142) est configuré pour attribuer séquentiellement l'unité de série à distribution élevée et l'unité de série à distribution basse dans un second ordre différent du premier ordre en tant qu'état opérationnel d'une seconde unité de série différente de la première unité de série parmi la pluralité d'unités de série normales.

5. Système de production d'hydrogène (1) selon la revendication 3,
dans lequel le dispositif de commande de distribution de puissance (14) est configuré pour diminuer une quantité de fourniture de puissance à l'unité de série défectueuse et pour augmenter une quantité de fourniture de puissance à l'unité de série normale, et
dans lequel le dispositif d'attribution d'opération de cellule (142) est configuré pour commander un état opérationnel de l'unité de série à distribution élevée de sorte qu'une ou plusieurs de l'unité de série à distribution élevée reçoit et partage la puissance électrique réduite vers l'unité de série défectueuse.

6. Système de production d'hydrogène (1) selon la revendication 2,
dans lequel si un degré de défaut de la cellule défectueuse (11) est inférieur à une valeur de référence, le dispositif de commande de distribution de puissance (14) est configuré pour diminuer une quantité de fourniture de puissance de l'unité de série défectueuse à un niveau inférieur à celui avant que le défaut ne se produise et dans une mesure qui peut supprimer la progression de la détérioration de la cellule défectueuse (11), et
dans lequel le dispositif de commande de distribution de puissance est configuré pour commander la distribution de puissance de telle sorte qu'une ou plusieurs de l'unité de série normale reçoit et partage la fourniture de puissance réduite vers l'unité de série défectueuse.

7. Système de production d'hydrogène (1) selon la revendication 3,
dans lequel le dispositif de commande de distribution de puissance (14) comprend un calculateur de taux de détérioration (145) qui est configuré pour calculer, selon une caractéristique de détérioration de la cellule d'électrolyse d'eau (11), un taux de détérioration de la cellule d'électrolyse d'eau (11) lors de l'exécution du plan de rotation d'opération, et
dans lequel le dispositif d'attribution d'opération de cellule (142) est configuré pour attribuer un état opérationnel de la cellule d'électrolyse d'eau (11) dans le plan de rotation d'opération de telle sorte que le taux de détérioration calculé dans l'unité de série défectueuse soit inférieur au taux de détérioration calculé dans l'unité de série normale.

8. Système de production d'hydrogène (1) selon la revendication 2,
dans lequel le système de production d'hydrogène (1) comprend en outre un moniteur de solidité (147) qui est configuré pour surveiller la solidité de la cellule d'électrolyse d'eau (11), et
dans lequel lorsque le défaut se produit, le dispositif de commande de distribution de puissance (14) est configuré pour fournir une quantité de fourniture de puissance plus grande à l'unité de série normale qui présente la solidité à un premier niveau qu'à l'unité de série normale qui présente la solidité à un second niveau inférieur au premier niveau.

9. Système de production d'hydrogène (1) selon la revendication 1,
dans lequel le système de production d'hydrogène (1) est configuré pour recevoir une puissance à partir d'une source de puissance,
dans lequel le système de production d'hydrogène (1) comprend en outre un distributeur (42) qui est configuré pour commuter si une puissance fournie à partir de la source de puissance est fournie à la cellule d'électrolyse d'eau (11) ou est délivrée en sortie vers un système de transmission et de distribution, et
dans lequel le système de production d'hydrogène (1) comprend en outre un système de gestion (41) configuré pour commander, en fonction de la demande de puissance, un rapport de la puissance fournie distribuée par le distributeur (42) entre la cellule d'électrolyse d'eau (11) et le système de transmission et de distribution.

10. Système de production d'hydrogène (1) selon la revendication 9,
dans lequel le système de gestion (41) est configuré pour estimer une variation de puissance à distribuer au système de transmission et de distribution dans le cas d'une réduction d'une quantité de fourniture de puissance à l'unité de série de la cellule d'électrolyse d'eau (11) incluant la cellule défectueuse (11),
dans lequel le système de gestion (41) est configuré pour estimer, sur la base de la demande de puissance, une perte économique causée par une variation de la puissance distribuée au système de transmission et de distribution, et
dans lequel le système de gestion (41) est configuré pour commander un rapport de distribution de la puissance fournie entre la cellule d'électrolyse d'eau (11) et le système de transmission et de distribution sur la base du résultat estimé de la perte économique.

11. Procédé de production d'hydrogène dans lequel une pluralité de cellules d'électrolyse d'eau (11) sont connectées électriquement en série et en parallèle, dans lequel la pluralité de cellules d'électrolyse d'eau (11) comprend en outre un commutateur (151) capable d'allumer/d'éteindre individuellement chacune de la pluralité de cellules d'électrolyse d'eau (11), et dans lequel une charge électrique (152) est connectée individuellement en parallèle à chacun des cellules d'électrolyse d'eau (11), le procédé comprenant les étapes consistant à :
commander une distribution de puissance à chacune des unités de série des cellules d'électrolyse d'eau (11) ;
commander un courant électrique circulant à travers l'unité de série en fonction d'un résultat de la commande de la distribution de puissance ;
détecter un défaut dans la cellule d'électrolyse d'eau (11) et identifier cette cellule d'électrolyse d'eau comme une cellule défectueuse (11) ; et
éteindre la cellule défectueuse (11) via le commutateur (151) ;
dans lequel, lors de la commande du courant électrique circulant dans l'unité de série, la distribution de puissance à chacune des unités de série de la cellule d'électrolyse d'eau (11) est commandée sur la base d'un emplacement de la cellule défectueuse (11) et d'une prédiction de détérioration d'une pluralité des cellules d'électrolyse d'eau (11) calculée sur la base d'une caractéristique de détérioration indiquant une sensibilité à la détérioration de la cellule d'électrolyse d'eau (11), et
dans lequel la charge électrique (152) de la cellule défectueuse (11) reçoit une puissance qui a été fournie à la cellule défectueuse (11) avant d'éteindre la cellule défectueuse (11), en supprimant ainsi des fluctuations d'une tension appliquée à la cellule d'électrolyse d'eau (11) en excluant la cellule défectueuse (11) lorsque la cellule défectueuse (11) est éteint.
